# EUROPÄISCHE PATENTSCHRIFT

(11) **EP 1 938 243 B1**
(45) Veröffentlichungstag und Bekanntmachung des Hinweises auf die Patenterteilung: **28.01.2009**
(21) Anmeldenummer: 06829220.0
(22) Anmeldetag: 30.11.2006
(51) Int. Cl.: G06K 7/00

(54) **VERFAHREN UND VORRICHTUNG ZUR KONTAKTLOSEN ÜBERTRAGUNG VON DATEN VON EINER VIELZAHL VON DATENTRÄGERN, VORZUGSWEISE IN FORM VON RFID-TAGS**
METHOD AND APPARATUS FOR CONTACTLESSLY TRANSMITTING DATA FROM A MULTIPLICITY OF DATA STORAGE MEDIA, PREFERABLY IN THE FORM OF RFID TAGS
PROCÉDÉ ET DISPOSITIF DE TRANSMISSION SANS CONTACT DE DONNÉES DEPUIS UNE PLURALITÉ DE SUPPORTS DE DONNÉES, DE PRÉFÉRENCE SOUS LA FORME D' ÉTIQUETTES RFID

(30) Priorität: 01.12.2005 DE 102005057546
(43) Veröffentlichungstag der Anmeldung: 02.07.2008
(73) Patentinhaber: Kathrein-Austria Ges.M.B.H., 6330 Kufstein (AT)
(72) Erfinder: KUHN, Jochen, A-6342 Niederndorferberg (AT)
(74) Vertreter: Flach, Dieter Rolf Paul
(86) Internationale Anmeldenummer: PCT/EP2006/011526
(87) Internationale Veröffentlichungsnummer: WO 2007/062849

(56) Entgegenhaltungen:
- EP-A- 1 505 531
- EP-A2- 1 160 583
- US-B1- 6 825 773

## Beschreibung

Die Erfindung betrifft ein Verfahren sowie eine Vorrichtung zur kontaktlosen Übertragung von Daten von einer Vielzahl von Datenträgern, insbesondere in Form von RFID-Tags nach dem Oberbegriff des Anspruches 1 bzw. 12.

Kontaktlose Identifikationssysteme mit einer induktiven Energie- und Datenübertragung von einer Daten-Sende-/Empfangsvorrichtung auf einen tragbaren Datenträger über ein magnetisches Wechselfeld sind beispielsweise aus der DE 198 45 065 A1 als bekannt zu entnehmen. Insbesondere bei der sogenannten Radiofrequenz-Identität oder Radiofrequenz-Identifizierung (RFID) handelt es sich um eine Möglichkeit, auf tragbaren Datenträgern befindliche Informationen kontaktlos auszulesen. Von daher eröffnet die RFID-Technik eine Vielzahl von Anwendungsmöglichkeiten, beispielsweise eröffnet sie die Möglichkeiten einer permanenten Überprüfung, ob z.B. bestimmte Güter oder Produkte in Lagern während Produktionsabläufen vorhanden sind oder ob bestimmte Güter mit bestimmten Ausstattungsmerkmalen an bestimmten Orten vorhanden sind.

RFID-Systeme haben mehrere Grundkomponenten und technische Eigenschaften, durch die sie definiert sind. Im allgemeinen ist ein sogenanntes Lesegerät, kurz auch Reader genannt, vorgesehen, welches mit einer Antenne in Verbindung steht. Über die Antenne wird vom Lesegerät ein entsprechendes Abfragesignal ausgesandt. Dieses von einem Tag empfangene Signal dient gleichzeitig zur Energieversorgung des Tags. Die entsprechenden Informationen werden auf dem Tag ausgelesen und an das Sende-Empfangs-Gerät, dem sogenannten Reader zurückgesandt, der über die Antenne das entsprechende Signal auffängt und auswertet. Es handelt sich dabei um einen bidirektionalen Sende-Empfangsweg in einem gleichen Frequenzbereich oder Frequenzband. Dazu sind in den unterschiedlichen Ländern gegebenenfalls unterschiedliche Frequenzbänder für diese Technik freigegeben.

Die erwähnten Tags umfassen üblicherweise neben einem Substrat, beispielsweise in Form einer gegebenenfalls biegbaren Folie, eine Datenträger-Antenne sowie eine zugehörige Schaltungsanordnung (Chip), in welcher die entsprechenden Informationen gespeichert sind, die nach Empfang eines Signals ausgelesen werden können.

Befinden sich mehrere Tags im Lesebereich eines RFID-Lesegerätes, so kann es zu Kollisionen beim Lesen kommen. Von daher sind bereits verschiedene Antikollisionsverfahren vorgeschlagen worden, um ein richtiges Erfassen und Auslesen diverser Tags vornehmen zu können.

Bekannt ist auch, den jeweils gerade gelesenen Tag nach dem Lesen "stumm" oder "inaktiv" zu schalten. Diese Funktion ist protokollabhängig und teilsweise durch entsprechende Lesegeräte automatisiert.

Ein stumm oder inaktiv geschalteter Tag bleibt so lange inaktiv und stumm, bis er wieder direkt adressiert wird. Alternativ ist ein derartiges Verhalten aber auch dadurch möglich, dass beispielsweise ein entsprechender Tag aus einem Energiefeld gerät, so dass er aufgrund der nun nicht mehr empfangenen Energie stumm oder inaktiv geschalten wird. Kommt der Tag anschließend wieder in ein entsprechendes Energiefeld, beispielsweise eines Lesegerätes, so führt dies automatisch zu einem Reset bzw. Neustart des Tags, mit der Folge, dass die auf dem Tag gespeicherten Informationen erneut ausgelesen werden können. Werden beispielsweise in einem bestimmten Bereich, der nachfolgend auch Tor oder Gate genannt wird, beispielsweise auf einem Förderband Einheiten mit einer Vielzahl von Tags durch- oder vorbeigeführt, so werden üblicherweise in einem derartigen Bereich auch mehrere Antennen mit einem Reader im Multiplexverfahren zugeschaltet. In einem derartigen Fall kommt es aber zu Problemen bezüglich des Auslesens aller Tags, insbesondere bezüglich der Auslesegeschwindigkeit.

Aus der gattungsbildenden US 5 995 019 A ist ein Verfahren zur kontaktlosen Übertragung von Daten bekannt, bei welchem ein Abfragesignal durch einen Reader über eine Antenne ausgesandt wird, um Informationen von den einzelnen RFID-Tags durch Empfangen eines vom jeweiligen RFID-Tag ausgesandten Informationssignals auszulesen. Dabei werden zum Auslesen der Vielzahl von RFID-Tags zumindest zwei oder mehrere Antennen verwendet. Ferner wird ein ausgelesener RFID-Tag inaktiviert.

Aus der US 6 903 656 B1 ist ein Verfahren zur kontaktlosen Übertragung von Daten von einer Vielzahl von RFID-Tags bekannt, bei welchem Abfragesignale durch einen Reader an RFID-Tags ausgesandt werden, um mittels mehrerer Antennen Informationen von den RFID-Tag auszulesen.

Aufgabe der vorliegenden Erfindung ist es von daher, ausgehend von dem gattungsbildenden Stand der Technik ein verbessertes Verfahren sowie eine verbesserte Vorrichtung zum schnelleren und zuverlässigeren Auslesen einer Vielzahl von Tags unter Verwendung von zumindest zwei oder mehreren Antennen zu schaffen.

Die Aufgabe wird bezüglich des Verfahrens entsprechend dem Anspruch 1 und bezüglich der Vorrichtung entsprechend dem im Anspruch 12 angegebenen Merkmalen gelöst. Vorteilhafte Ausgestaltungen der Erfindung sind in den Unteransprüchen angegeben.

Mit der vorliegenden Erfindung wird eine wesentliche Verbesserung gegenüber dem herkömmlichen Verfahren bzw. herkömmlichen Vorrichtungen geschaffen.

Erfindungsgemäß wird nämlich vorgeschlagen, dass die im Auslesebereich befindlichen Tags permanent mit Energie versorgt werden, damit sie stets ihren aktuellen Zustand behalten. Sind die Tags auf aktiv geschaltet, also noch nicht gelesen bzw. ausgelesen, so behalten sie diesen Zustand in dem Energieversorgungsbereich. Sind sie bereits ausgelesen und deshalb in "inaktiv" oder "stumm" geschaltet worden, so können sie diesen Zustand durch die zusätzlich vorgesehene Energieversorgung beibehalten. Dadurch wird gewährleistet, dass beim Umschalten des Auslesens des Tags von einer auf die nächste Antenne nicht die mit der zuvor zugeschalteten Antenne ausgelesenen Tags durch den Wegfall des Energiestroms über diese Antenne abgeschaltet werden. Denn dies hätte zur Folge, dass bei einem nächsten Auslesezyklus unter Verwendung der vorher energielos geschalteten Antenne wiederum alle Tags neu resetet würden und daher alle Tags wieder erneut ausgelesen werden müssen. Im Gegensatz dazu wird durch die Erfindung sichergestellt, dass alle Tags einer mehr oder weniger permanenten Energie- oder Tagversorgung unterzogen werden, indem beispielsweise nach dem Umschalten von einer auf die nächste Antenne die zuvor verwendete Antenne zum Auslesen der Informationen auf den Tags mit einer separaten Energieversorgungs-Trägerfrequenz gespeist wird, so dass sich die zuvor ausgelesenen Tags also weiterhin (permanent) in einem Energiefeld befinden. Von daher können die zuvor ausgelesenen Tags nach der erfolgten Auslesung weiterhin dauerhaft in dem Zustand "inaktiv" bzw. "stumm" gehalten werden, da ein Reset beim erneuten Zuschalten der Antenne zum Auslesen dieser Tags nicht stattfinden kann. Somit ist gewährleistet, dass sich alle Tags sehr viel schneller und zuverlässiger auslesen lassen. Schlecht erreichbare Tags werden zwar erst später (eventuell erst nach einigen Multiplexzyklen) erfasst und ausgelesen. Gleichwohl können aber durch die Aktivierung dieser Tags speziell diese Tags dann noch erfasst und ausgelesen werden, da die bereits im vorhergehenden Zyklus ausgelesenen Tags weiterhin dauerhaft auf "stumm" oder "inaktiv" geschalten bleiben.

Eine derartige zusätzliche Energieversorgung muss spätestens nach dem Umschalten von einer der Auslesung von Tags dienenden Antenne auf eine andere Antenne erfolgen. Bevorzugt werden aber bei Verwendung mehrerer Antennen stets alle oder alle anderen Antennen mit einem Trägersignal zur Energieversorgung des Tags gespeist, mit Ausnahme jener Antenne, über die gerade aktiv Informationen von Tags ausgelesen werden. Dabei wird angemerkt, dass grundsätzlich auch mehrere Reader gegebenenfalls mit mehreren Antennen vorgesehen sein können, die eventuell gleichzeitig oder zumindest abschnittsweise gleichzeitig zum Auslesen von Tags dienen.

Bevorzugt sendet der zusätzlich vorgesehene Träger, der nachfolgend auch als Energieversorgungssender bezeichnet wird, auf der gleichen oder einer anderen Frequenz als das Lesegerät. Üblicherweise wird die Sendefrequenz des Energieversorgungsträgers aber innerhalb des jeweiligen länderspezifischen Frequenzbereiches liegen, der für diese Dienste zugelassen und freigegeben ist.

Grundsätzlich ist das erfindungsgemäße System auch auf andere Frequenzbereiche übertragbar.

Bevorzugt wird nur ein Lesegerät verwendet, zusätzlich mit einer Umschaltsteuerung. Durch die Umschaltsteuerung kann das Lesegerät jeweils abwechselnd mit einer von mehreren Antennen verbunden werden. Durch die Umschaltvorrichtung wird bevorzugt ebenfalls sichergestellt, dass die jeweils anderen Antennen dann mit dem Energieversorgungs-Sender verbunden sind.

Bevorzugt kann der gesamte Aufbau in einem Gehäuse untergebracht sein. Alternativ ist aber auch modularer Aufbau möglich, bei welchem ein Lesegerät als eigenständiges Gerät oder als separates Modul neben einer Umsteuereinrichtung und dem Energieversorgungsträger verwendet wird.

Das Umschalten zur Herstellung von unterschiedlichen Verbindungen zwischen dem Lesegerät und einer der mehreren Antennen kann auf unterschiedliche Weise erfolgen, bevorzugt zyklisch mit einstellbaren Zeiten, nach dem Zufallsprinzip, protokollabhängig bzw. abhängig vom Reader, nach dem Zustand, ob ein bestimmter Tag gelesen oder eine bestimmte Menge von Tags gelesen wurden. Beschränkungen gibt es insoweit nicht.

Die erfindungsgemäße Lösung hat aber auch folgende weitere Vorteile, nicht nur beim Umschalten der Antenne, sondern auch insbesondere beim erstmaligen Zuschalten des Gesamtsystems. Dabei wird von der Erkenntnis ausgegangen, dass über die mit dem aktiven Lesegerät verbundene Antenne nur eine Teilmenge aller Tags erreicht und mit Energie versorgt werden kann. Eine verbleibende Restmenge wird ganz oder teilweise über zumindest eine weitere Antenne mit Energie versorgt, nämlich über den erfindungsgemäß vorgesehenen zusätzlichen Energieversorgungsträger. Bedenkt man dabei, dass die Tags beim Einstellvorgang eine gewisse Zeit brauchen, bis die benötigte Energie für den Betrieb zur Verfügung steht (Einschaltzeit), so heißt dies, dass nach der Aktivierung des Systems alle Tags oder ein großer Teil aller weiteren Tags mit Energie versorgt werden, nämlich auch die Tags, die im Energiestrahlungsfeld der zumindest einen weiteren Antenne liegen, die über den Energieversorgungsträger mit Energie gespeist wird. Dies hat zur Folge, dass die Einschaltung auch der Tags der Restmenge parallel zur Auslesezeit und/oder zur Schreibzeit der Tags geschieht, die im Strahlungsfeld der mit dem aktiven Lesegerät verbundenen Antenne liegen. Dadurch entsteht ein gewisser Zeitvorteil, wenn dann das Lesegerät nachfolgend Tags auslesen oder beschreiben will, die vorher im Strahlungsfeld der zumindest einen Antenne lagen, die mit dem zusätzlichen Energieversorgungsträger verbunden waren. Dieser Zeitvorteil wird nicht nur beim Einschalten des Systems, sondern auch bei jedem weiteren Multiplexzyklus erzielt, da kein erneutes Einschalten der Tags notwendig ist, die jeweils zuvor über den Energieversorgungs-Sender und die zumindest eine zusätzliche Antenne mit Energie versorgt worden sind.

Dieser Zeitvorteil wächst unter anderem dann, wenn
- die Multiplexzeitscheiben sehr kurz sind,
- eine hohe Anzahl von Multiplexzyklen vorliegt, und/oder
- eine schlechte Erreichbarkeit der Tags gegeben ist (was an sich zu einer längeren Einschaltzeit dieser Tags führen würde).

Die Erfindung wird nachfolgend anhand von Zeichnungen für ein Ausführungsbeispiel näher erläutert. Dabei zeigen im Einzelnen:
- Figur 1 :: eine schematische Darstellung eines so- genannten Gates (Tor), durch welches bei- spielsweise eine Vielzahl von Einheiten, die sich auf einem Förderband befinden, hindurchbewegt werden, wobei im gezeigten Ausführungsbeispiel drei Antennen vorgese- hen sind;
- Figur 2 :: ein schematischer Aufbauplan zur Erläute- rung eines erfindungsgemäßen erweiterten Lasersystems unter Verwendung von drei An- tennen.

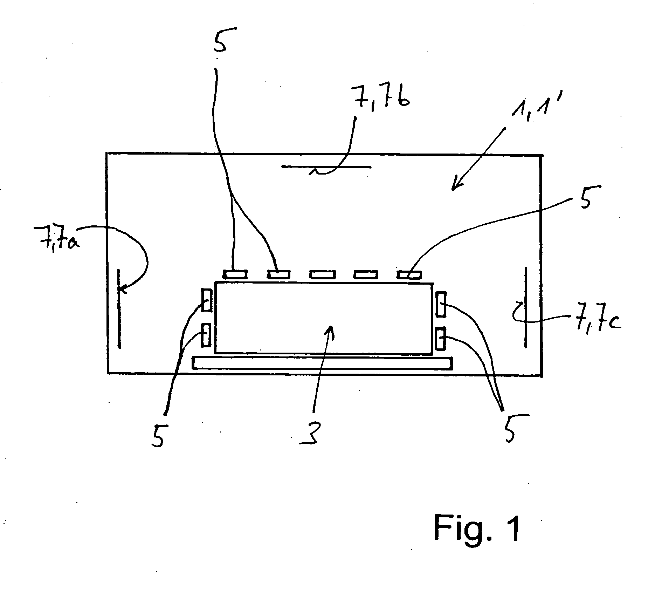

Anhand von Figur 1 ist in schematischer Querschnittsdarstellung ein Gate 1, also ein sogenanntes Tor 1 oder allgemein ein Lesebereich 1' gezeigt, durch welches hindurch oder an welchem vorbei eine Vielzahl von Gegenständen 3 oder Produkten 3 etc. befördert wird. Im gezeigten Ausführungsbeispiel werden beispielsweise eine Vielzahl von Gegenständen oder Produkten 3 durch dieses Gate 1 hindurch befördert, die mit einer Vielzahl von Informations-Trägern 5, kurz Tags 5 genannt, versehen sind.

Im Rahmen des vorliegenden Verfahrens bzw. der vorliegenden Vorrichtung werden Tags 5 verwendet, die mit keiner eigenen Energieversorgung versehen sind. Sie sind grundsätzlich so aufgebaut, dass sie mit einer integrierten, nicht näher dargestellten Tag-Antenne zum Empfang von Signalen eines Readers mit einer integrierten Schaltungsanordnung auf einem Substrat versehen sind, in welchem entsprechende Informationen gespeichert sind, die bekannterweise durch einen Reader ausgelöst werden können.

Damit die Tags ihre Informationen aussenden können, benötigen sie Energie, die sie durch das Sendesignal eines Lesegerätes (Readers) erhalten.

Im gezeigten Ausführungsbeispiel sind bei der Vielzahl der Gegenstände 3 an verschiedenen Stellen liegend Tags 5 vorgesehen, die es erforderlich machen, dass die darauf befindlichen Informationen durch verschiedene Antennen 7 ausgelesen werden müssen, im gezeigten Ausführungsbeispiel durch die Antenne 7a, 7b bzw. 7c.

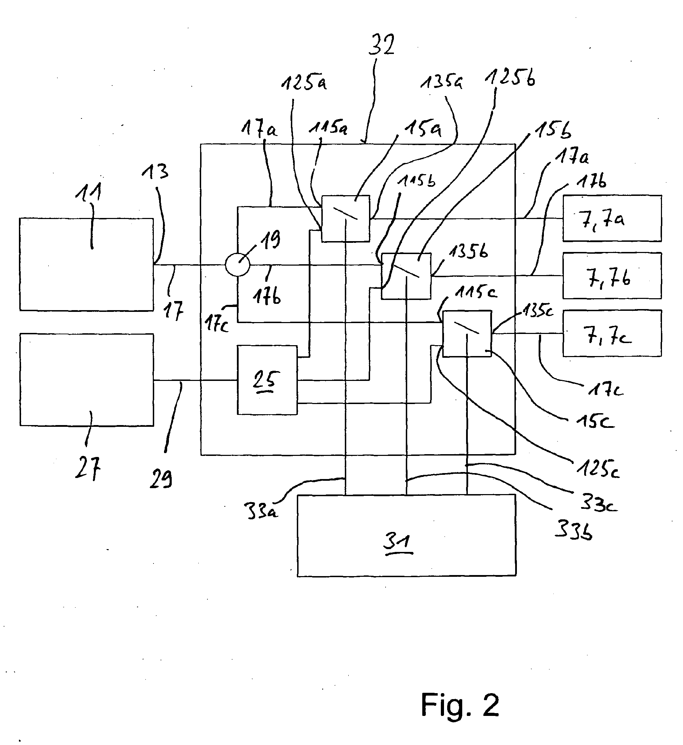

Der weitere Aufbau wird anhand von Figur 2 erläutert.

Figur 2 zeigt wiederum ein Lesegerät 11, einen sogenannten Reader 11, der beispielsweise in einem Frequenzband von 865 MHz bis 868 MHz sendet bzw. empfängt. Die Sende- sowie Empfangskanäle liegen im gleichen Frequenzband bzw. auf der gleichen Frequenz. Ein derartiges Lesegerät umfasst dabei üblicherweise intern eine Sende- oder Empfangsvorrichtung in zwei Pfaden sowie die zugehörige Energieversorgung, wobei insoweit auf bekannt Lösungen verwiesen wird.

Ein Anschluss 13 am Lesegerät 11, welcher für die Sendesignale als Ausgang und für die Empfangssignale als Eingang dient, ist nicht wie üblich, mit einer einzigen, dem Reader 11 zugeordneten Antenne, sondern im gezeigten Ausführungsbeispiel unter Zwischenschaltung von Umschalteinrichtungen 15 mit jeweils einer von mehreren Antennen 7a bis 7c verbindbar. Dazu führt die Anschlussleitung 17 vom Anschluss 13 des Lesegerätes 11 zu einem Verzweigungspunkt oder einer Verzweigungsschaltung 19, von der nunmehr drei Anschlussleitungen 17a bis 17c zu jeweils einem Eingang, d.h. im gezeigten Ausführungsbeispiel einem Eingang 115a, 115b bzw. 115c einer jeweiligen Umschalteinrichtung 15a bis 15c verbunden ist.

Die Umschalteinrichtungen 15 verfügen über einen zweiten Eingang 125a bis 125c, der über eine Verzweigungsschaltung 25 mit einem zusätzlichen Energieversorgungssender 27 über eine Leitung 29 verbunden ist. Es handelt sich hierbei um einen zusätzlichen Träger, der beispielsweise auf einer Frequenz von 868 MHz sendet, bevorzugt auf einer Frequenz in dem gleichen Frequenzband, in dem auch das Lesegerät sendet bzw. empfängt.

Schließlich ist auch noch eine Umschaltsteuerung 31 vorgesehen, deren Schaltleitungen 33a bis 33c mit einem Steuerungseingang der Umschalteinrichtungen 15a bis 15c verbunden sind.

Die drei Ausgänge 135a bis 135c der drei Umschalteinrichtungen 15a bis 15c sind über drei Antennenleitungen 17a bis 17c mit den drei Antennen 7a bis 7c verbunden.

Mit den erwähnten Umschalteinrichtungen 15a bis 15c, der Verzweigungsstelle 19 sowie der Verzweigungsschaltung 25 und den zugehörigen Leitungen wird eine Signalverteilungseinrichtung 32 gebildet, zu der gegebenenfalls auch die Umschaltsteuerung 31 gehören kann.

Nachfolgend wird auf die Funktionsweise eingegangen.

Wird beispielsweise das Lesegerät 11 über die Umschaltsteuerung 31 und die nachfolgende erste Antennenleitung 17 und 17a mit der Antenne 7a verbunden, so können im Bereich der Antenne 7a befindliche bzw. hierüber auslesbare Tags nach üblichen Verfahren und unter Berücksichtigung bekannter Kollisionsverfahren nacheinander ausgelesen werden.

Während dessen sind die beiden weiteren Umschalteinrichtungen 15b und 15c so geschaltet, dass jeweils der Energieversorgungs-Sender 27 über die entsprechenden Energieversorgungsleitungen und dem zweiten Eingang 125b und 125c der Umschalteinrichtungen 15b und 15c und über die nachfolgenden Antennenleitungen 17b und 17c mit den Antennen 7b und 7c verbunden ist, worüber die an anderer Stelle befindlichen Tags mit Energie versorgt werden.

Jeweils derjenige Tag, von dem Informationen über eine Antenne 7a und den zugeschalteten Reader 11 ausgelesen werden, wird anschließend auf "inaktiv" bzw. "stumm" geschalten, um nur noch solche Tags im Energieversorgungsbereich der Antenne 7a zu erfassen, die noch nicht ausgelesen sind.

Nach einem bestimmten Verfahren, beispielsweise Zeitmultiplexverfahren, kann dann über die Umsteuerung 31 die Umschalteinrichtung so umgeschaltet werden, dass der Reader 11 über die zweite Umschalteinrichtung 15b mit der zweiten Antenne 7b verbunden wird. Gleichzeitig wird aber die erste Umschaltsteuereinrichtung auf ihren zweiten Eingang umgeschaltet, so dass nunmehr der Energieversorgungssender 27 über die erste Umschalteinrichtung 15a mit der ersten Antenne 7a verbunden ist. Dadurch wird sichergestellt, dass die bereits ausgelesenen und auf "inaktiv" bzw. "stumm" geschalteten Tags weiter mit Energie versorgt werden und weiterhin in diesem Zustand verharren. Die Verbindung zwischen dem Energieversorgungssender 27 und der dritten Antenne 7c bleibt dabei weiter aufrecht erhalten.

Nachfolgend erfolgt eine weitere Umschaltung, bei der das Lesegerät über die Umsteuerung und die Umschalteinrichtung 15c mit der dritten Antenne 7c verbunden wird. Gleichzeitig wird die zweite Umschalteinrichtung 15b ebenfalls so umgeschaltet, dass der Energieversorgungssender 27 nicht nur über die erste Umschalteinrichtung 15a mit der ersten Antenne 7a, sondern gleichzeitig auch über die zweite Umschalteinrichtung 15b mit der zweiten Antenne 7b verbunden ist, um die in diesem Einzugsbereich befindlichen Tags mit Energie zu versorgen.

Ein entsprechendes Auslesen kann so in mehreren Zyklen erfolgen, wobei durch die weitere Umschaltung beispielsweise wiederum das Lesegerät mit der ersten Antenne und der Energieversorgungssender 27 mit der zweiten und dritten Antenne verbunden ist u.s.w. Da aber in der Zwischenzeit die über die erste Antenne bereits ausgelesenen Tags weiter mit einer Trägerfrequenz mit Energie versorgt wurden und von daher in dem umgeschaltenen Zustand "stumm" bzw. "inaktiv" geblieben sind, können nun die eventuell ungünstiger liegenden oder allgemein noch nicht erfassten Tags bzw. deren Informationen schneller und zuverlässiger ausgelesen werden, da kein erneutes Auslesen aller Tags erfolgen muss.

Die gesamte Umschaltung kann also in mehreren Zyklen permanent weiter vorgenommen werden, so dass auf diese Weise schneller und zuverlässiger in der Regel alle Tags ausgelesen werden können, ohne dass eine doppelte Auslesung erfolgt.

Aufgrund der nachfolgenden Beschreibung ergibt sich aber auch, dass im Rahmen der Erfindung Vorteile, vor allem Zeitvorteile gegeben sind, wenn Multiplexzeitscheiben zum aufeinanderfolgenden Abfragen von Tags sehr kurz sind, eine hohe Anzahl von Multiplexzyklen vorliegt, und/oder zumindest einige Tags schlecht erreichbar sind, wodurch längere Einschaltzeiten zum Auslesen oder Beschreiben der Tags notwendig werden.

Um die Zeitvorteile besser zu verstehen, wird nachfolgend davon ausgegangen, dass die Menge aller Tags unterteilt werden kann in eine Menge von Tags, die direkt durch das aktive Lesegerät, also den zugeschalteten Reader 11 und die damit verbundene Antenne erreicht werden. Diese über das Lesegerät und die zugeschaltete Antenne mit Energie versorgte Teilmenge der Tags wird nachfolgend als Menge M1 bezeichnet.

Ferner besteht eine weitere Menge von Tags M2, die durch zumindest eine weitere, allgemein gesprochen, durch alle anderen Antennen, die mit dem Energieversorgungssender 27 verbunden sind, erreicht und mit Energie versorgt werden. Die Gesamtmenge aller Tags besteht also aus der Menge M1 + der Menge M2. Nach jedem Multiplexvorgang sind die vorstehend genannten Teilmengen unterschiedlich.

Die Tags brauchen beim Einschaltvorgang eine gewisse Zeit, bis sie die benötigte Energie für den Betrieb zur Verfügung haben (Einschaltzeit). Nach der Aktivierung des Gesamtsystems, also nach dem Zuschalten des Readers und des zusätzlichen Energieversorgungssenders 27, werden bevorzugt simultan oder in unmittelbarer zeitlicher Nähe alle Tags mit Energie versorgt, auch jene Tags, die zur Menge M2 gehören, also durch den zusätzlichen Energieversorgungsträger mit Energie versorgt werden. (Wobei für die nachfolgende Überlegung auch ausreichend wäre, wenn von dieser Menge nur eine Teilmenge mit zusätzlicher Energie über den Energieversorgungssender versorgt werden würde.) Dies hat zur Folge, dass die Einschaltung der Tags aus der Menge M2 während der Auslesezeit und/oder der Schreibzeit der Tags aus M1 erfolgt. Dadurch entsteht also ein gewisser Zeitvorteil, wenn das Lesegerät und die darüber verbundene Antenne umgeschaltet wird, um nunmehr Tags, die zur Menge M2 gehören, in einem nächsten Schritt auszulesen oder zu beschreiben, also dann, wenn ein neuer Multiplexzyklus durchlaufen wird. Denn die neu auszulesenden oder zu beschreibenden Tags sind bereits durch die zuvor erfolgte Energieversorgung "eingeschaltet", so dass eine ansonsten als Nachteil festzustellende Einschaltzeit wegfällt. Dieser Zeitvorteil wird also nicht nur beim erstmaligen Einschalten des Gesamtsystems, sondern bei jedem weiteren Multiplexzyklus erzielt.

Die gesamte Anordnung kann modular aufgebaut sein, also als Modul das Lesegerät, den zusätzlichen Energieversorgungssender, die Umsteuerung sowie die einzelnen Umschalteinrichtungen und die Antennen umfassen. Mit Ausnahme der Antennen kann die Anordnung auch in Form einer integrierten Bauweise ausgebildet sein, bei der die Anordnung mit Ausnahme der Antennen in einem gemeinsamen Gehäuse untergebracht ist. Unter Umständen können aber auch die Antennen in einem entsprechend gestalteten und beispielsweise ein Tor umfassenden Gehäuse mit integriert sein.

Die erläuterte Umschaltung selbst muss nicht zyklisch erfolgen. Bevorzugt erfolgt sie allerdings zyklisch, beispielsweise mit einer einstellbaren oder vorgebbaren Zeit, wobei bei mehreren aufeinander folgenden Zyklen auch die Zeiträume, über die Tags über eine Antenne ausgelesen werden, gegebenenfalls auch unterschiedlich eingestellt oder im Verlauf mehrerer Zyklen auch verändert werden können. Ebenso kann eine Auslesung aber auch nach dem Zufallsprinzip erfolgen oder in Abhängigkeit einer Steuerung vom Reader oder protokollabhängig. Beispielsweise kann grundsätzlich eine Umschaltung auf eine andere Antenne vorgenommen werden, wenn beispielsweise ein Tag oder eine bestimmte Anzahl von Tags neu ausgelesen wurden.

## Patentansprüche

1. Verfahren zur kontaktlosen Übertragung von Daten von einer Vielzahl von Daten- oder Informations-Trägern (5), vorzugsweise in Form von RFID-Tags, mit folgenden Verfahrensschritten:
- Senden eines Abfragesignals durch einen Reader (11) über eine an den Reader (11) angeschlossene Antenne (7; 7a, 7b, 7c) an einen oder mehrere Informations-Träger (5),
- Auslesen von Informationen von einem einzelnen Informations-Träger (5) durch Empfangen eines vom Informations-Träger (5) ausgesandten und durch eine Antenne (7; 7a, 7b, 7c) empfangenen Informationssignals,
- ein ausgelesener Informations-Trägers (5) wird nach dem Auslesen seiner Informationen auf "stumm" oder "inaktiv" geschalten, und
- zum Auslesen der Vielzahl von Informations-Trägern (5) werden zumindest zwei oder mehrere Antennen (7; 7a, 7b, 7c) verwendet,
**gekennzeichnet durch** die folgenden weiteren Merkmale:
- der Reader (11) wird in zeitlichem Abstand abwechselnd jeweils mit einer anderen der mehreren Antennen (7; 7a, 7b, 7c) verbunden, um hierüber Abfragesignale an Informations-Träger (5) auszusenden und/oder Informationssignale von betreffenden Informations-Trägern (5) zu empfangen, und
- wird die Verbindung zwischen dem Reader (11) und einer zunächst mit dem Reader (11) verbunden Antenne (7; 7a, 7b, 7c) getrennt, so wird gleichzeitig diese vom Reader (11) getrennte Antenne (7; 7a, 7b, 7c) mit zumindest einem weiteren Energieversorgungssender (27) verbunden, um die im Energiefeld dieser Antenne liegenden und bereits ausgelesenen und/oder auf "stumm" oder "inaktiv" geschalteten Informations-Träger (5) zur Aufrechterhaltung dieses Zustands weiterhin mit Energie zu versorgen.

2. Verfahren nach Anspruch 1, **dadurch gekennzeichnet, dass** alle Antennen (7; 7a, 7b, 7c), die im zeitlichen Abstand mit dem Reader (11) verbunden werden, zu den Zeiten, zu denen sie vom Reader (11) getrennt sind, mit dem Energieversorgungssender (27) verbunden sind, um die im Energiefeld dieser Antenne oder dieser Antennen (7; 7a, 7b, 7c) befindlichen und in den Zustand "stumm" oder "inaktiv" geschalteten Informations-Träger (5) in diesem Zustand zu halten.

3. Verfahren nach Anspruch 1 und 2, **dadurch gekennzeichnet, dass** das Umschalten des Readers (11) zur aufeinanderfolgenden Herstellung einer Verbindung des Readers (11) mit jeweils einer anderen der mehreren Antennen (7; 7a, 7b, 7c) und die entsprechende Verbindung des zumindest einen Energieversorgungssenders (27) mit den anderen nicht mit dem Reader (11) verbundenen Antennen (7; 7a, 7b, 7c) zyklisch erfolgt.

4. Verfahren nach einem der Ansprüche 1 bis 3, **dadurch gekennzeichnet, dass** das Umschalten des Readers (11) zur aufeinanderfolgenden Herstellung einer Verbindung des Readers (11) mit jeweils einer anderen der mehreren Antennen (7; 7a, 7b, 7c) und die entsprechende Verbindung des zumindest einen Energieversorgungssenders (27) mit den anderen nicht mit dem Reader (11) verbundenen Antennen (7; 7a, 7b, 7c) zyklisch mit einstellbaren oder veränderbaren Zeiten erfolgt.

5. Verfahren nach einem der Ansprüche 1 bis 4, **dadurch gekennzeichnet, dass** das Umschalten des Readers (11) zur aufeinanderfolgenden Herstellung einer Verbindung des Readers (11) mit jeweils einer anderen der mehreren Antennen (7; 7a, 7b, 7c) und die entsprechende Verbindung des zumindest einen Energieversorgungssenders (27) mit den anderen nicht mit dem Reader (11) verbundenen Antennen (7; 7a, 7b, 7c) im Zeitmultiplexverfahren erfolgt.

6. Verfahren nach einem der Ansprüche 1 bis 5, **dadurch gekennzeichnet, dass** das Umschalten des Readers (11) zur aufeinanderfolgenden Herstellung einer Verbindung des Readers (11) mit jeweils einer anderen der mehreren Antennen (7; 7a, 7b, 7c) und die entsprechende Verbindung des zumindest einen Energieversorgungssenders (27) mit den anderen nicht mit dem Reader (11) verbundenen Antennen (7; 7a, 7b, 7c) nach einem Zufallsprinzip erfolgt.

7. Verfahren nach einem der Ansprüche 1 bis 6, **dadurch gekennzeichnet, dass** das Umschalten des Readers (11) zur aufeinanderfolgenden Herstellung einer Verbindung des Readers (11) mit jeweils einer anderen der mehreren Antennen (7; 7a, 7b, 7c) und die entsprechende Verbindung des zumindest einen Energieversorgungssenders (27) mit den anderen nicht mit dem Reader (11) verbundenen Antennen (7; 7a, 7b, 7c) abhängig vom Reader (11) und/oder protokollabhängig erfolgt, vorzugsweise in Abhängigkeit davon, ob zumindest ein weiterer Informations-Träger (5) ausgelesen wurde.

8. Verfahren nach einem der Ansprüche 1 bis 7, **dadurch gekennzeichnet, dass** eine der Anzahl der Antennen (7; 7a, 7b, 7c) entsprechende Anzahl von Umschalteinrichtungen (15; 15a, 15b, 15c) verwendet wird, deren beide Eingänge (115, 125) zumindest mittelbar mit dem Reader (11) bzw. dem Energieversorgungssender (27) verbunden werden, wobei unter Verwendung einer Umschaltsteuerung (31) jeweils nur einer der beiden Eingänge mit einer mit einer nachgeschalteten Antenne (7; 7a, 7b, 7c) verbundenen Antennenleitung (17a, 17b, 17c) verbunden wird.

9. Verfahren nach einem der Ansprüche 1 bis 8, **dadurch gekennzeichnet, dass** der Reader (11) und der zumindest eine weitere Energieversorgungssender (27) in einem gleichen Frequenzband arbeiten oder die von dem Energieversorgungssender (27) verwendete Frequenz innerhalb eines vom Reader (11) verwendeten Frequenzbandes liegt.

10. Verfahren nach einem der Ansprüche 1 bis 9, **dadurch gekennzeichnet, dass** zumindest ein Teil der Informations-Träger (5; M2) und vorzugsweise alle Informations-Träger (5; M2), die nicht im Energiefeld der Antenne (7) liegen, die mit dem aktiven Reader (11) verbunden ist, über die zumindest eine weitere der mehreren Antennen (7), die mit dem Energieversorgungssender (27) verbunden ist, mit Energie versorgt werden.

11. Verfahren nach Anspruch 10, **dadurch gekennzeichnet, dass** bei Zu- bzw. Anschalten des Gesamtsystems eine Energieversorgung über die mit dem Reader (11) verbundene Antenne (7; 7a) und bevorzugt simultan oder zeitnah oder innerhalb eines vorwählbaren Zeitfensters, welches vorzugsweise kleiner ist als ein Multiplexzyklus, auch über die zumindest eine weitere der mehreren Antennen (7; 7b, 7c), die mit dem zugeschaltenen Energieversorgungssender (27) verbunden ist, erfolgt.

12. Vorrichtung zur kontaktlosen Übertragung von Daten von einer Vielzahl von Daten- oder Informations-Trägern (5), vorzugsweise in Form von RFID-Tags, mit folgenden Merkmalen:
- es ist ein Reader (11) vorhanden, der an eine Antenne (7; 7a, 7b, 7c) angeschlossen oder anschließbar ist, worüber Abfragesignale an einen oder mehrere Informations-Träger (5) aussendbar sind,
- es sind eine Mehrzahl von Informations-Trägern (5) vorhanden, die Informationen enthalten, und die nach Empfang eines elektromagnetischen der Energieversorgung dienenden Signals entsprechende Informationen auslesen und an eine Antenne (7; 7a, 7b, 7c) zur Auswertung an den angeschlossenen Reader (11) senden,
- mit einer Einrichtung, mittels der ein ausgelesener Informations-Träger (5) anschließend auf "stumm" oder "inaktiv" schaltbar ist, und
- mit zumindest zwei oder mehreren Antennen (7; 7a, 7b, 7c),
**gekennzeichnet durch** die folgenden weiteren Merkmale:
- es ist eine Signalverteilungseinrichtung (32) vorhanden,
- die Signalverteilungseinrichtung (32) umfasst zumindest zwei Umschalteinrichtungen (15; 15a, 15b, 15c)
- über die Umschalteinrichtung (15; 15a, 15b, 15c) ist der Reader (11) für eine bestimmte zeitliche Phase vorzugsweise zyklisch wiederholend mit einer der mehreren Antennen (7; 7a, 7b, 7c) verbunden,
- über die Umschalteinrichtung (15; 15a, 15b, 15c) ist der Reader (11) nachfolgend mit einer anderen der mehreren Antennen (7; 7a, 7b, 7c) verbunden,
- es ist ein Energieversorgungssender (27) vorhanden, und
- die Antenne (7; 7a, 7b, 7c), die nach Umschaltung des Readers (11) auf eine andere Antenne (7; 7a, 7b, 7c) zuletzt mit dem Reader (11) verbunden war, wird mit dem Energieversorgungssender (27) verbunden, um die im Energiefeld dieser Antenne oder dieser Antennen (7; 7a, 7b, 7c) befindlichen und in den Zustand "stumm" oder "inaktiv" geschaltenen Informations-Träger (5) in diesem Zustand zu halten.

13. Vorrichtung nach Anspruch 12, **dadurch gekennzeichnet, dass** über die Umschalteinrichtungen (15; 15a, 15b, 15c) im zeitlichen Abstand alle Antennen (7; 7a, 7b, 7c) in beliebiger und vorzugsweise zyklischer Folge mit dem Reader (11) verbunden sind, und dass alle anderen zu bestimmten Zeitdauern nicht mit dem Reader (11) verbundenen Antennen (7; 7a, 7b, 7c) mit dem zumindest einen Energieversorgungssender (27) zur Ausstrahlung von elektromagnetischer Energie verbunden sind.

14. Vorrichtung nach Anspruch 12 oder 13, **dadurch gekennzeichnet, dass** eine Umschaltsteuerung (31) vorgesehen ist, worüber die Umschalteinrichtungen (15; 15a, 15b, 15c) ansteuerbar sind.

15. Vorrichtung nach einem der Ansprüche 12 bis 14, **dadurch gekennzeichnet, dass** die Umschalteinrichtungen (15; 15a, 15b, 15c) zumindest zwei Eingänge aufweisen, wobei jeweils ein Eingang (115a, 115b, 115c) vorzugsweise über eine Verzweigungsschaltung (19) mit dem Reader (11) und der andere Eingang (125a, 125b, 125c) vorzugsweise über eine Verzweigungsschaltung (25) mit dem Energieversorgungssender (27) verbunden sind.

16. Vorrichtung nach Anspruch 15, **dadurch gekennzeichnet, dass** die Umschalteinrichtungen (15; 15a, 15b, 15c) zumindest über einen weiteren Steuerungseingang verfügen, der mit der Umschaltsteuerung (31) verbunden ist.

17. Vorrichtung nach einem der Ansprüche 12 bis 16, **dadurch gekennzeichnet, dass** die Umschalteinrichtung (15) zumindest einen Ausgang aufweisen, der mit zumindest einem Eingang einer zugeordneten Antenne (7; 7a, 7b , 7c) verbunden ist.

18. Vorrichtung nach einem der Ansprüche 12 bis 17, **dadurch gekennzeichnet, dass** die Vorrichtung modular aufgebaut ist.

19. Vorrichtung nach einem der Ansprüche 1 bis 17, **dadurch gekennzeichnet, dass** die Umschalteinrichtungen (15; 15a, 15b, 15c) und vorzugsweise die die Umschalteinrichtung (15; 15a, 15b, 15c) ansteuernde Signalverteilungseinrichtung (32) und vorzugsweise der Reader (11) und insbesondere der Energieversorgungssender (27) als einheitlich handhabbares Gerät aufgebaut sind.

20. Vorrichtung nach einem der Ansprüche 1 bis 19, **dadurch gekennzeichnet, dass** die Signalverteilungseinrichtung (32) und/oder die Umschaltsteuerung (31) so aufgebaut ist bzw. sind, dass das Umschalten des Readers (11) zur aufeinanderfolgenden Herstellung einer Verbindung des Readers (11) mit jeweils einer anderen Antenne (7; 7a, 7b, 7c) und die entsprechende Verbindung des zumindest einen Energieversorgungssenders (27) mit den anderen nicht mit dem Reader (11) verbundenen Antennen (7; 7a, 7b, 7c) zyklisch erfolgt.

21. Vorrichtung nach einem der Ansprüche 1 bis 20, **dadurch gekennzeichnet, dass** die Signalverteilungseinrichtung (32) und/oder die Umschaltsteuerung (31) so aufgebaut sind, dass das Umschalten des Readers (11) zur aufeinanderfolgenden Herstellung einer Verbindung des Readers (11) mit jeweils einer anderen der mehreren Antennen (7; 7a, 7b, 7c) und die entsprechende Verbindung des zumindest einen Energieversorgungssenders (27) mit den anderen nicht mit dem Reader (11) verbundenen Antennen (7; 7a, 7b, 7c) zyklisch mit einstellbaren und/oder veränderbaren Seiten erfolgt.

22. Vorrichtung nach einem der Ansprüche 1 bis 19, **dadurch gekennzeichnet, dass** die Signalverteilungseinrichtung (32) und/oder die Umschaltsteuerung (31) so aufgebaut sind, dass das Umschalten des Readers (11) zur aufeinanderfolgenden Herstellung einer Verbindung des Readers (11) mit jeweils einer anderen der mehreren Antennen (7; 7a, 7b, 7c) und die entsprechende Verbindung des zumindest einen Energieversorgungssenders (27) mit den anderen nicht mit dem Reader (11) verbundenen Antennen (7; 7a, 7b, 7c) im Zeitmultiplexverfahren erfolgt.

23. Vorrichtung nach einem der Ansprüche 12 bis 19, **dadurch gekennzeichnet, dass** die Signalverteilungseinrichtung (32) und/oder die Umschaltsteuerung (31) so aufgebaut sind, dass das Umschalten des Readers (11) zur aufeinanderfolgenden Herstellung einer Verbindung des Readers (11) mit jeweils einer anderen der mehreren Antennen (7; 7a, 7b, 7c) und die entsprechende Verbindung des zumindest einen Energieversorgungssenders (27) mit den anderen nicht mit dem Reader (11) verbundenen Antennen (7; 7a, 7b, 7c) nach einem Zufallsprinzip erfolgt.

24. Vorrichtung nach einem der Ansprüche 12 bis 19, **dadurch gekennzeichnet, dass** die Signalverteilungseinrichtung (32) und/oder die Umschaltsteuerung (31) so aufgebaut sind, dass das Umschalten des Readers (11) zur aufeinanderfolgenden Herstellung einer Verbindung des Readers (11) mit jeweils einer anderen der mehreren Antennen (7; 7a, 7b, 7c) und die entsprechende Verbindung des zumindest einen Energieversorgungssenders (27) mit den anderen nicht mit dem Reader (11) verbundenen Antennen (7; 7a, 7b, 7c) abhängig vom Reader (11) und/oder protokollabhängig erfolgt, vorzugsweise in Abhängigkeit davon, ob zumindest ein weiterer Informations-Träger (5) ausgelesen wurde.

25. Vorrichtung nach einem der Ansprüche 12 bis 24, **dadurch gekennzeichnet, dass** der Energieversorgungssender (27) auf einer Frequenz sendet, die einer Frequenz entspricht, auf der auch der Reader (11) sendet und/oder empfängt, oder die zumindest eine Frequenz eines Frequenzbandes darstellt, auf dem der Reader (11) sendet und/oder empfängt.

26. Vorrichtung nach einem der Ansprüche 12 bis 25, **dadurch gekennzeichnet, dass** der Reader (11) und die hierüber verbundene Antenne (7; 7a) sowie der Energieversorgungssender (27) mit zumindest einer zugehörigen weiteren der mehreren Antennen (7; 7b, 7c) simultan oder vorzugsweise innerhalb eines einstellbaren oder vorwählbaren Zeitfensters, welches vorzugsweise kleiner ist als die Dauer eines Multiplexzyklus, an- oder zuschaltbar sind.

## Claims

1. Method for contactless transmission of data from a number of data or information carriers (5), preferably in the form of RFID tags, with the following process steps:
- transmission of a polling signal by a reader (11) via an antenna (7; 7a, 7b, 7c) connected to the reader (11) to one or more information carriers (5),
- reading out of information from an individual information carrier (5) by receipt of an information signal transmitted by the information carrier (5) and received by an antenna (7; 7a, 7b, 7c),
- a read information carrier (5) is switched to "silent" or "inactive" once its information has been read out, and
- in order to read out the number of information carriers (5) at least two or more antennas (7; 7a, 7b, 7c) are used,
**characterised by** the following further features:
- the reader (11) is connected alternately at time intervals in each case with another of the number of antennas (7; 7a, 7b, 7c), in order via this to send polling signals to information carriers (5) and/or to receive information signals from the information carriers (5) concerned, and
- if the connection between the reader (11) and an antenna (7; 7a, 7b, 7c) initially connected with the reader (11) is broken, then simultaneously this antenna (7; 7a, 7b, 7c) that has been disconnected from the reader (11) is connected with at least one further energy source transmitter (27), in order to continue to supply the information carriers (5), which are in the energy field of this antenna and which have already been read out and/or switched to "silent" or "inactive", with energy to maintain this state.

2. Method according to Claim 1, **characterised in that** all antennas (7; 7a, 7b, 7c), which are connected with the reader (11) in the time interval, for the times for which they are disconnected from the reader (11), are connected with the energy source transmitter (27), in order to maintain the information carriers (5) located in the energy field of this antenna or these antennas (7; 7a, 7b, 7c) and switched to the "silent" or "inactive" state in this state.

3. Method according to Claims 1 and 2, **characterised in that** the switching of the reader (11) for the successive setting up of a connection between the reader (11) and a respective other of the number of antennas (7; 7a, 7b, 7c) and the corresponding connection of the at least one energy source transmitter (27) with the other antennas (7; 7a, 7b, 7c) not connected with the reader (11) takes place cyclically.

4. Method according to any one of Claims 1 to 3, **characterised in that** the switching of the reader (11) for the successive setting up of a connection between the reader (11) and a respective other of the number of antennas (7; 7a, 7b, 7c) and the corresponding connection of the at least one energy source transmitter (27) with the other antennas (7; 7a, 7b, 7c) not connected with the reader (11) takes place cyclically with adjustable or changeable intervals.

5. Method according to any one of Claims 1 to 4, **characterised in that** the switching of the reader (11) for the successive setting up of a connection between the reader (11) and a respective other of the number of antennas (7; 7a, 7b, 7c) and the corresponding connection of the at least one energy source transmitter (27) with the other antennas (7; 7a, 7b, 7c) not connected with the reader (11) takes place using the time multiplex method.

6. Method according to any one of Claims 1 to 5, **characterised in that** the switching of the reader (11) for the successive setting up of a connection between the reader (11) and a respective other of the number of antennas (7; 7a, 7b, 7c) and the corresponding connection of the at least one energy source transmitter (27) with the other antennas (7; 7a, 7b, 7c) not connected with the reader (11) takes place according to a random principle.

7. Method according to any one of Claims 1 to 6, **characterised in that** the switching of the reader (11) for the successive setting up of a connection between the reader (11) and a respective other of the number of antennas (7; 7a, 7b, 7c) and the corresponding connection of the at least one energy source transmitter (27) with the other antennas (7; 7a, 7b, 7c) not connected with the reader (11) takes place under the control of the reader (11) and/or according to a protocol, preferably depending on whether at least one further information carrier (5) has been read out.

8. Method according to any one of Claims 1 to 7, **characterised in that** one of the quantity of switching devices (15; 15a, 15b, 15c) corresponding to the quantity of antennas (7; 7a, 7b, 7c) is used, the two inputs of which (115, 125) are at least directly connected with the reader (11) or the energy source transmitter (27), wherein by using a switching controller (31) in each case only one of the two inputs is connected with an antenna lead (17a, 17b, 17c) connected with an antenna (7; 7a, 7b, 7c) connected in series.

9. Method according to any one of Claims 1 to 8, **characterised in that** the reader (11) and the at least one additional energy source transmitter (27) work in the same frequency band or the frequency used by the energy source transmitter (27) is within a frequency band used by the reader (11).

10. Method according to any one of Claims 1 to 9, **characterised in that** at least part of the information carriers (5; M2) and preferably all the information carriers (5; M2), which are not located in the energy field of the antenna (7), which is connected to the active reader (11), are supplied with energy via the at least one more of the number of antennas (7) that is connected to the energy source transmitter (27).

11. Method according to Claim 10, **characterised in that** the turning on or off of the system as a whole takes place via the antenna (7; 7a) connected with the reader (11) and preferably simultaneously or within a short space of time or within a pre-selectable time window, which is preferably smaller than a multiplex cycle, including via the at least one more of the number of antennas (7; 7b, 7c) that is connected to the energy source transmitter (27).

12. Device for contactless transmission of data from a number of data or information carriers (5), preferably in the form of RFID tags, with the following features:
- a reader (11) is present, which is connected or connectable to an antenna (7; 7a, 7b, 7c), via which polling signals can be sent to one or more information carriers (5),
- a number of information carriers (5) is present, containing information, and which following receipt of an electromagnetic signal that serves as the power source, read out corresponding information and send this to an antenna (7; 7a, 7b, 7c) for evaluation at the connected reader (11),
- with a device by means of which an information carrier (5) that has been read out can then be switched to "silent" or "inactive", and
- with at least two or more antennas (7; 7a, 7b, 7c),
**characterised by** the following further features:
- a signal distribution device (32) is present,
- the signal distribution device (32) comprises at least two switching devices (15; 15a, 15b, 15c),
- via the switching device (15; 15a, 15b, 15c) the reader (11) is connected for a specific, preferably cyclically repeating time phase with one of the number of antennas (7; 7a, 7b, 7c),
- via the switching device (15; 15a, 15b, 15c) the reader (11) is then connected with another of the number of antennas (7; 7a, 7b, 7c),
- an energy source transmitter (27) is present, and
- the antenna (7; 7a, 7b, 7c), which following the switching of the reader (11) to another antenna (7; 7a, 7b, 7c) was last connected with the reader (11), is connected with the energy source transmitter (27), in order to maintain the information carriers (5) located in the energy field of this antenna or these antennas (7; 7a, 7b, 7c) and switched to the "silent" or "inactive" state in this state.

13. Device according to Claim 12, **characterised in that** via the switching devices (15; 15a, 15b, 15c) in the interval of time all antennas (7; 7a, 7b, 7c) are connected in any and preferably a cyclical sequence with the reader (11), and **in that** all other antennas (7; 7a, 7b, 7c) that are not connected with the reader (11) for specific periods are connected with the at least one energy source transmitter (27) for radiation of electromagnetic energy.

14. Device according to Claim 12 or 13, **characterised in that** a switching controller (31) is provided, via which the switching devices (15; 15a, 15b, 15c) can be driven.

15. Device according to any one of Claims 12 to 14, **characterised in that** the switching devices (15; 15a, 15b, 15c) have at least two inputs, wherein in each case one input (115a, 115b, 115c) is preferably connected via a branch circuit (19) with the reader (11) and the other input (125a, 125b, 125c) is preferably connected via a branch circuit (25) with the energy source transmitter (27).

16. Device according to Claim 15, **characterised in that** the switching devices (15; 15a, 15b, 15c) have at least one further control input which is connected with the switching controller (31).

17. Device according to any one of Claims 12 to 16, **characterised in that** the switching device (15) has at least one output which is connected with at least one input of an assigned antenna (7; 7a, 7b, 7c).

18. Device according to any one of Claims 12 to 17, **characterised in that** the device has a modular design.

19. Device according to any one of Claims 1 to 17, **characterised in that** the switching devices (15; 15a, 15b, 15c) and preferably the signal distribution device (32) driving the switching device and preferably the reader (11) and in particular the energy source transmitter (27) are designed as a handy single unit.

20. Device according to any one of Claims 1 to 19, **characterised in that** the signal distribution device (32) and/or the switching controller (31) is/are constructed in such a way that the switching of the reader (11) for successive creation of a connection between the reader (11) and in each case another antenna (7; 7a, 7b, 7c) and the corresponding connection of the at least one energy source transmitter (27) with the other antennas (7; 7a, 7b, 7c) not connected with the reader (11), takes place cyclically.

21. Device according to any one of Claims 1 to 20, **characterised in that** the signal distribution device (32) and/or the switching controller (31) are constructed in such a way that the switching of the reader (11) for successive creation of a connection between the reader (11) and in each case another of the number of antennas (7; 7a, 7b, 7c) and the corresponding connection of the at least one energy source transmitter (27) with the other antennas (7; 7a, 7b, 7c) not connected with the reader (11), takes place cyclically with adjustable and/or variable intervals.

22. Device according to any one of Claims 1 to 19, **characterised in that** the signal distribution device (32) and/or the switching controller (31) are constructed in such a way that the switching of the reader (11) for successive creation of a connection between the reader (11) and in each case another of the number of antennas (7; 7a, 7b, 7c) and the corresponding connection of the at least one energy source transmitter (27) with the other antennas (7; 7a, 7b, 7c) not connected with the reader (11), takes place using the time multiplex method.

23. Device according to any one of Claims 12 to 19, **characterised in that** the signal distribution device (32) and/or the switching controller (31) are constructed in such a way that the switching of the reader (11) for successive creation of a connection between the reader (11) and in each case another of the number of antennas (7; 7a, 7b, 7c) and the corresponding connection of the at least one energy source transmitter (27) with the other antennas (7; 7a, 7b, 7c) not connected with the reader (11), takes place according to a random principle.

24. Device according to any one of Claims 12 to 19, **characterised in that** the signal distribution device (32) and/or the switching controller (31) are constructed in such a way that the switching of the reader (11) for successive creation of a connection between the reader (11) and in each case another of the number of antennas (7; 7a, 7b, 7c) and the corresponding connection of the at least one energy source transmitter (27) with the other antennas (7; 7a, 7b, 7c) not connected with the reader (11), takes place under the control of the reader (11) and/or according to a protocol, preferably according to whether at least one further information carrier (5) has been read out.

25. Device according to any one of Claims 12 to 24, **characterised in that** the energy source transmitter (27) transmits at a frequency which corresponds to a frequency at which the reader (11) transmits and/or receives, or which at least represents a frequency in a frequency band in which the reader (11) transmits and/or receives.

26. Device according to any one of Claims 12 to 25, **characterised in that** the reader (11) and the antenna (7; 7a) connected via this and the energy source transmitter (27) can be connected to or brought into circuit with at least one further of the number of antennas associated with it (7; 7b, 7c) simultaneously or preferably within an adjustable or pre-selectable time window, which is preferably smaller than the duration of a multiplex cycle.

## Revendications

1. Procédé pour la transmission sans contact de données depuis une pluralité de supports de données ou d'informations (5), de préférence sous la forme d'étiquettes RFID, comprenant les étapes suivantes :
- émission d'un signal d'interrogation par un lecteur (11), via une antenne (7 ; 7a, 7b, 7c) raccordée au lecteur (11), vers un ou plusieurs supports d'informations (5),
- lecture d'informations depuis un support d'informations (5) individuel par réception d'un signal d'informations émis par le support d'informations (5) et reçu par une antenne (7 ; 7a, 7b, 7c),
- commutation d'un support d'informations (5) une fois lu, après lecture de ses informations, vers une condition "muette" ou "inactive", et
- utilisation d'au moins deux ou plusieurs antennes (7 ; 7a, 7b, 7c) pour la lecture de la pluralité de supports d'informations (5),
**caractérisé par** les caractéristiques suivantes :
- liaison du lecteur (11) à des écarts temporels en alternance respectivement à une autre des plusieurs antennes (7 ; 7a, 7b, 7c), pour émettre par celles-ci des signaux d'interrogation vers des supports d'informations (5) et/ou pour recevoir des signaux d'informations provenant des supports d'information (5) concernés, et
- lorsque la liaison entre le lecteur (11) et une antenne (7 ; 7a, 7b, 7c) tout d'abord reliée au lecteur (11) est séparée, ladite antenne (7 ; 7a, 7b, 7c) séparée depuis le lecteur (11) est alors reliée à au moins un autre émetteur (27) d'alimentation d'énergie afin de poursuivre l'alimentation en énergie des supports d'informations (5) situés dans le champ énergétique de cette antenne et déjà lus et/ou commutés en condition "muette" ou "inactive" pour le maintien de cet état.

2. Procédé selon la revendication 1, **caractérisé en ce que** toutes les antennes (7 ; 7a, 7b, 7c), qui sont reliées à des écarts temporels avec le lecteur (11), sont reliées, pendant les périodes pendant lesquelles elles sont séparées du lecteur (11), à l'émetteur (27) d'alimentation en énergie, afin de maintenir les supports d'information (5), qui se trouvent dans le champ énergétique de cette antenne ou de ces antennes (7 ; 7a, 7b, 7c) et qui sont commutées en condition "muette" ou "inactive" dans cette condition.

3. Procédé selon la revendication 1 ou 2, **caractérisé en ce que** la commutation du lecteur (11) pour établir successivement une liaison du lecteur (11) avec une autre antenne respective des plusieurs antennes (7 ; 7a, 7b, 7c) et pour établir de façon correspondante la liaison dudit au moins un émetteur d'alimentation d'énergie (27) avec les autres antennes (7 ; 7a, 7b, 7c) qui ne sont pas reliées au lecteur (11) a lieu de façon cyclique.

4. Procédé selon l'une des revendications 1 à 3, **caractérisé en ce que** la commutation du lecteur (11) pour établir successivement une liaison du lecteur (11) avec une autre antenne respective des plusieurs antennes (7 ; 7a, 7b, 7c) et pour établir de façon correspondante la liaison dudit au moins un émetteur d'alimentation d'énergie (27) avec les autres antennes (7 ; 7a, 7b, 7c) qui ne sont pas reliées au lecteur (11) a lieu de façon cyclique avec des temps réglables ou variables.

5. Procédé selon l'une des revendications 1 à 4, **caractérisé en ce que** la commutation du lecteur (11) pour établir successivement une liaison du lecteur (11) avec une autre antenne respective des plusieurs antennes (7 ; 7a, 7b, 7c) et pour établir de façon correspondante la liaison dudit au moins un émetteur d'alimentation d'énergie (27) avec les autres antennes (7 ; 7a, 7b, 7c) qui ne sont pas reliées au lecteur (11) a lieu selon un processus de multiplexage temporel.

6. Procédé selon l'une des revendications 1 à 5, **caractérisé en ce que** la commutation du lecteur (11) pour établir successivement une liaison du lecteur (11) avec une autre antenne respective des plusieurs antennes (7 ; 7a, 7b, 7c) et pour établir de façon correspondante la liaison dudit au moins un émetteur d'alimentation d'énergie (27) avec les autres antennes (7 ; 7a, 7b, 7c) qui ne sont pas reliées au lecteur (11) a lieu selon un principe aléatoire.

7. Procédé selon l'une des revendications 1 à 6, **caractérisé en ce que** la commutation du lecteur (11) pour établir successivement la liaison du lecteur (11) avec une autre antenne respective des plusieurs antennes (7 ; 7a, 7b, 7c) et pour établir de façon correspondante la liaison dudit au moins un émetteur d'alimentation d'énergie (27) avec les autres antennes (7 ; 7a, 7b, 7c) qui ne sont pas reliées au lecteur (11) a lieu en fonction du lecteur (11) et/ou en fonction d'un protocole, de préférence en fonction de savoir si au moins un autre support d'information (5) a été lu.

8. Procédé selon l'une des revendications 1 à 7, **caractérisé en ce que** l'on utilise un nombre de moyens de commutation (15 ; 15a, 15b, 15c) qui correspond au nombre d'antennes (7 ; 7a, 7b, 7c), les deux entrées (115, 125) de ces moyens étant reliées au moins indirectement au lecteur (11) ou à l'émetteur d'alimentation d'énergie (27), et en utilisant une commande de commutation (31), seule l'une des deux entrées est respectivement reliée à une ligne d'antenne (17a, 17b, 17c) reliée à une antenne (7 ; 7a, 7b, 7c) branchée en aval.

9. Procédé selon l'une des revendications 1 à 8, **caractérisé en ce que** le lecteur (11) et ledit au moins un autre émetteur d'alimentation d'énergie (27) fonctionnent dans une même bande de fréquences, ou **en ce que** la fréquence utilisée par l'émetteur d'alimentation d'énergie (27) se trouve à l'intérieur d'une bande de fréquences utilisée par le lecteur (11).

10. Procédé selon l'une des revendications 1 à 9, **caractérisé en ce qu'**une partie au moins des supports d'informations (5 ; M2) et de préférence tous les supports d'informations (5 ; M2) qui ne se trouvent pas dans le champ énergétique de l'antenne (7) qui est reliée au lecteur actif (11), sont alimentés en énergie via une autre au moins des plusieurs antennes (7) qui est reliée à l'émetteur d'alimentation d'énergie (27).

11. Procédé selon la revendication 10, **caractérisé en ce que** lors de la mise en service ou de la mise en marche du système global, se produit une alimentation d'énergie via l'antenne (7 ; 7a) reliée au lecteur (11), et de préférence de façon simultanée ou proche dans le temps ou encore à l'intérieur d'une fenêtre temporelle prédéterminée, laquelle est de préférence plus petite qu'un cycle de multiplexage, également via ladite au moins une autre des plusieurs antennes (7 ; 7b, 7c) qui est reliée à l'émetteur d'alimentation d'énergie (27) branché.

12. Dispositif pour la transmission sans contact de données depuis une pluralité de support de données ou d'informations (5), de préférence sous la forme d'étiquettes RFID, présentant les éléments techniques suivants :
- il est prévu un lecteur (11), raccordé ou susceptible d'être raccordé à une antenne (7 ; 7a, 7b, 7c), via laquelle des signaux d'interrogation peuvent être émis vers un ou plusieurs supports d'informations (5),
- il est prévu une pluralité de supports d'informations (5) qui contiennent des informations et qui, après réception d'un signal électromagnétique servant à l'alimentation d'énergie, lisent des informations correspondantes et les envoient à une antenne (7 ; 7a, 7b, 7c) pour l'évaluation au lecteur (11) raccordé,
- il est prévu des moyens à l'aide desquels un support d'informations (5) lu peut être ensuite commuté en condition "muette" ou "inactive", et
- il est prévu au moins deux ou plusieurs antennes (7 ; 7a, 7b, 7c),
**caractérisé par** les caractéristiques suivantes :
- il est prévu des moyens de répartition de signaux (32),
- les moyens de répartition de signaux (32) comprennent au moins deux dispositifs de commutation (15, 15a, 15b, 15c),
- le lecteur (11) est relié via le dispositif de commutation (15 ; 15a, 15b, 15c) pour une phase temporelle déterminée et de préférence de façon cycliquement répétée, à l'une des plusieurs antennes (7 ; 7a, 7b, 7c),
- il est prévu un émetteur d'alimentation d'énergie (27), et
- l'antenne (7 ; 7a, 7b, 7c) qui, après commutation du lecteur (11) vers une autre antenne (7 ; 7a, 7b, 7c), était reliée en dernier au lecteur (11), est reliée à l'émetteur d'alimentation d'énergie (27) afin de maintenir les supports d'information (5) qui se trouvent dans le champ d'énergie de cette antenne ou de ces antennes (7 ; 7a, 7b, 7c) et sont commutés dans la condition "muette" ou "inactive" dans cette situation.

13. Dispositif selon la revendication 12, **caractérisé en ce qu'**à l'aide des moyens de commutation (15 ; 15a, 15b, 15c), toutes les antennes (7 ; 7a, 7b, 7c) sont reliées à des écarts temporels et en succession quelconque et de préférence cyclique avec le lecteur (11), et **en ce que** toutes les autres antennes (7 ; 7a, 7b, 7c) qui ne sont pas reliées pendant des périodes temporelles déterminées avec le lecteur (11) sont reliées audit au moins un émetteur d'alimentation d'énergie (27) pour émettre une énergie électromagnétique.

14. Dispositif selon la revendication 12 ou 13, **caractérisé en ce qu'**il est prévu une commande de commutation (31) au moyen de laquelle les moyens de commutation (15 ; 15a, 15b, 15c) peuvent être pilotés.

15. Dispositif selon l'une des revendications 12 à 14, **caractérisé en ce que** les moyens de commutation (15 ; 15a, 15b, 15c) comprennent au moins deux entrées, une entrée respective (115a, 115b, 115c) étant reliée au lecteur (11) de préférence via un circuit de ramification (19) et l'autre entrée (125a, 125b, 125c) étant reliée à l'émetteur d'alimentation d'énergie (27) de préférence via un circuit de ramification (25).

16. Dispositif selon la revendication 15, **caractérisé en ce que** les moyens de commutation (15 ; 15a, 15b, 15c) disposent d'au moins une autre entrée de commande, laquelle est reliée à la commande de commutation (31).

17. Dispositif selon l'une des revendications 12 à 16, **caractérisé en ce que** les moyens de commutation (15) comportent au moins une sortie, laquelle est reliée à au moins une entrée d'une antenne associée (7 ; 7a, 7b, 7c).

18. Dispositif selon l'une des revendications 12 à 17, **caractérisé en ce que** le dispositif est réalisé de manière modulaire.

19. Dispositif selon l'une des revendications 12 à 17, **caractérisé en ce que** les moyens de commutation (15 ; 15a, 15b, 15c), et de préférence le dispositif de répartition de signaux (32) qui pilote les moyens de commutation (15 ; 15a, 15b, 15c), et de préférence le lecteur (11) et en particulier l'émetteur d'alimentation d'énergie (27) sont conçus comme un appareil susceptible d'être manipulé de façon unitaire.

20. Dispositif selon l'une des revendications 12 à 19, **caractérisé en ce que** le dispositif de répartition de signaux (32) et/ou la commande de commutation (31) est/sont réalisé(s) de telle façon que la commutation du lecteur (11) pour établir en succession une liaison du lecteur (11) avec à chaque fois une autre antenne (7 ; 7a, 7b, 7c) et pour la liaison correspondante dudit au moins un émetteur d'alimentation d'énergie (27) avec les autres antennes (7 ; 7a, 7b, 7c) qui ne sont pas reliés au lecteur (11) a lieu de manière cyclique.

21. Dispositif selon l'une des revendications 12 à 20, **caractérisé en ce que** le dispositif de répartition de signaux (32) et/ou la commande de commutation (31) est/sont réalisé(s) de telle façon que la commutation du lecteur (11) pour établir en succession une liaison du lecteur (11) avec à chaque fois une autre antenne (7 ; 7a, 7b, 7c) et pour la liaison correspondante dudit au moins un émetteur d'alimentation d'énergie (27) avec les autres antennes (7 ; 7a, 7b, 7c) qui ne sont pas reliés au lecteur (11) a lieu de manière cyclique avec des durées réglables et/ou variables.

22. Dispositif selon l'une des revendications 12 à 19, **caractérisé en ce que** le dispositif de répartition de signaux (32) et/ou la commande de commutation (31) est/sont réalisé(s) de telle façon que la commutation du lecteur (11) pour établir en succession une liaison du lecteur (11) avec à chaque fois une autre antenne (7 ; 7a, 7b, 7c) et pour la liaison correspondante dudit au moins un émetteur d'alimentation d'énergie (27) avec les autres antennes (7 ; 7a, 7b, 7c) qui ne sont pas reliés au lecteur (11) a lieu selon un processus de multiplexage temporel.

23. Dispositif selon l'une des revendications 12 à 19, **caractérisé en ce que** le dispositif de répartition de signaux (32) et/ou la commande de commutation (31) est/sont réalisé(s) de telle façon que la commutation du lecteur (11) pour établir en succession une liaison du lecteur (11) avec à chaque fois une autre antenne (7 ; 7a, 7b, 7c) et pour la liaison correspondante dudit au moins un émetteur d'alimentation d'énergie (27) avec les autres antennes (7 ; 7a, 7b, 7c) qui ne sont pas reliés au lecteur (11) a lieu selon un principe aléatoire.

24. Dispositif selon l'une des revendications 12 à 19, **caractérisé en ce que** le dispositif de répartition de signaux (32) et/ou la commande de commutation (31) est/sont réalisé(s) de telle façon que la commutation du lecteur (11) pour établir en succession une liaison du lecteur (11) avec à chaque fois une autre antenne (7 ; 7a, 7b, 7c) et pour la liaison correspondante dudit au moins un émetteur d'alimentation d'énergie (27) avec les autres antennes (7 ; 7a, 7b, 7c) qui ne sont pas reliés au lecteur (11) a lieu en fonction du lecteur (11) et/ou en fonction d'un protocole, de préférence en fonction de savoir si au moins un autre support d'information (5) a été lu.

25. Dispositif selon l'une des revendications 12 à 14, **caractérisé en ce que** l'émetteur d'alimentation d'énergie (27) émet à une fréquence qui correspond à une fréquence à laquelle émet et/ou reçoit également le lecteur (11), ou qui représente au moins une fréquence d'une bande de fréquences à laquelle le lecteur (11) émet et/ou reçoit.

26. Dispositif selon l'une des revendications 12 à 25, **caractérisé en ce que** le lecteur (11) et l'antenne (7 ; 7a) reliée via celui-ci ainsi que l'émetteur d'alimentation d'énergie (27) peuvent être connectés à au moins une autre antenne associée parmi les plusieurs antennes (7 ; 7b, 7c) simultanément ou de préférence à l'intérieur d'une fenêtre temporelle réglable ou prédéterminée, laquelle est de préférence plus petite que la durée d'un cycle de multiplexage.
